(19)

Europäisches
Patentamt
European
Patent Office
Office européen
des brevets

(11) **EP 3 687 262 A1**

(12) # EUROPEAN PATENT APPLICATION

(43) Date of publication:
**29.07.2020 Bulletin 2020/31**

(21) Application number: **19000040.6**

(22) Date of filing: **24.01.2019**

(51) Int Cl.:
*H05G 2/00* (2006.01)     *H01F 17/04* (2006.01)
*H01F 17/06* (2006.01)     *H01F 27/28* (2006.01)
*H01F 27/42* (2006.01)     *H01F 38/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Naser Technology OÜ
10117 Tallinn (EE)**

(72) Inventor: **Pastukhov, Andrei
10117 Tallinn (EE)**

(74) Representative: **Pikkor, Riho
Patendibüroo Turvaja OÜ
Liivalaia 22
10118 Tallinn (EE)**

Remarks:
Amended claims in accordance with Rule 137(2)
EPC.

(54) **ELECTROMAGNETIC RADIATION OF NANOMETER RANGE GENERATING DEVICE**

(57)     The invention relates to the field of quantum radiophysics and is the solid-state quantum generator of nanometer range electromagnetic radiation. It may be widely used in engineering, nanotechnology, physics, biology, chemistry and medicine. The claimed device comprises at least two electric power adjustment devices, at least one phase shifting device, at least one electromagnetic wave emitter, at least two exciting inductors and an excited inductor. It is configured to adjust electrical power in the first and second exciting inductors, allowing to receive electrical signals with equal amplitudes in them. The phase shifting device is made with the possibility of adjusting the phase angle between the signals on first and second exciting inductors so as to ensure that alternating currents of the exciting inductors create counter-fluxes of mutual induction (uniformly variable magnetic fluxes). As these fluxes interact with the excited inductor, the motion of conduction electrons in the excited inductor winding acquires a variable spiral character, kinetic energy of the electrons' motion becomes quantized and the transitions of electrons from higher energy levels to lower ones provide generation of electromagnetic wave radiation of nanometer range.

The technical result achieved when using the invention is the effect of generation electromagnetic wave radiation of nanometer range with a sharp decrease in energy costs, objectively manifested when using the claimed device.

Fig 1

EP 3 687 262 A1

**Description**

The present invention relates to the field of quantum radio physics and is a solid-state nanometre range electromagnetic radiation quantum generator. It may be widely used in technics, nanotechnology, physics, chemistry, biology and medicine. More specifically, the present invention is applicable to sterilization and gas purification systems, fluorescent lighting devices and so on.

PRIOR ART

There are several known types of quantum generators that vary in type of working agent used: solid-state (crystal or glass), gas, semiconductor or dye-based ones. Quantum generators may also vary by the active medium forming particles, which could be molecules, atoms, free or conduction electrons.

There is a conduction electrons-based solid-state cyclotron maser (US Patent №4376917), which can produce oscillations at frequency between 300 and 30000 GHz in a submilli-metre range. However, it has restrictions on the wavelength or frequency it can emit and on maximum temperature at which it should be maintained. Its working temperature must be low enough, as the frequency and amplitude of atomic vibrations in the crystal and therefore electron momentum are dependent on it. The magnetic field, on which the radiation frequency depends, on the contrary, must be high, since the radius of the circular orbit of the electron is inversely proportional to its magnitude.

There also is an ionizing radiation generator (Russian patent №2488243), in which pulsed magnetic coils are placed on a microwave resonator in the intrapolar space of an electromagnet. This construction provides both additional acceleration of electrons in the auto resonant mode to relativistic energies and the generation of bremsstrahlung upon interaction of accelerated electrons with a solid-state target.

The disadvantages of the known devices are: complexity of the technical implementation, limited power of electromagnetic radiation, requirement for low operating temperatures, strong magnetic and electric fields.

INVENTION DISCLOSURE

The stated disadvantages of the known devices show that there is a task consisting in the creation of such a solution that would ensure the efficient generation of electromagnetic radiation of the nanometre range with low power consumption and with a simple technical design. The technical problem of obtaining such radiation is caused by the need to create conditions under which the motion of free electrons in a metal acquires a variable spiral character, the kinetic energy of the electrons' motion becomes quantized, and the electronic transitions from higher energy levels to lower ones result the emission of an electromagnetic wave.

The technical result that solves these problems with a significant reduction in energy costs is the effect of generation radiation by conductivity electrons of in the nanometre range electromagnetic waves, which can be objectively manifested when using the proposed device.

In the claimed device, the phenomenon of radiation of electromagnetic waves during the movement of conduction electrons along spiral paths is used for generation of electromagnetic radiation. To achieve the desired result, three inductors are used, the first and second ones as exciting, and the third one as excited. Equal in amplitude, but shifted in phase by a certain angle relative to each other, the alternating electric currents of the exciting inductors create uniformly variable counter-fluxes of mutual induction. The change of these fluxes induces uniformly variable electromotive forces in the winding of the excited inductor located between two exciting ones. The phase angle of the currents of the exciting inductors is set in such a way as to ensure the creation of uniformly variable magnetic counter-fluxes. In this case, magnetic counter-fluxes provide simultaneous effect of two equal but opposite Lorentz forces on the conduction electrons. Thus, under the influence of Lorentz forces and opposite uniformly variable electromotive forces, the motion of free electrons in the winding of the excited inductor acquires a variable spiral character, its kinetic energy becomes quantized, and the electronic transitions from higher to lower energy levels are accompanied by the emission of an electromagnetic wave.

It is known that free electrons in a metal move with velocities $v \sim 0,01c$ ($c$ - light speed in vacuum). This chaotic motion of particles of an electron gas has a purely quantum, but not thermal origin - it does not stop even at absolute zero.

The velocity of free electrons' motion (Fermi velocity) in copper is $v = 1,58 \cdot 10^6$ m/s, and when using copper wires in the inductance coil, the length of electromagnetic waves caused by alternating movement of conduction electrons corresponds to

$$\lambda = \frac{h}{mv},$$

where:

h - Planck constant, $h = 6{,}626 \cdot 10^{-34}$ J·s (m²·kg/s);
m - mass of electron, $m = 9{,}109 \cdot 10^{-31}$ kg;
v - Fermi velocity of free electrons in copper, $v = 1{,}58 \cdot 10^6$ m/s.

Accordingly, the wavelength of the acquired radiation is:

$$\lambda = \frac{6{,}626 \cdot 10^{-34}\, m^2 \cdot kg/s}{9{,}109 \cdot 10^{-31}\, kg \cdot 1{,}58 \cdot 10^6\, m/s} = 4{,}6 \cdot 10^{-10}\, m,$$

wherein its frequency is:

$$f = \frac{3 \cdot 10^8\, m/s}{4{,}6 \cdot 10^{-10}\, m} = 652 \cdot 10^{15}\, Hz.$$

The calculated radiation parameters (frequency $f = 652 \cdot 10^{15}$ Hz, wavelength $\lambda = 4{,}6 \cdot 10^{-10}$ m) indicate the possibility of using the above technical solution to create a quantum generator on conduction electrons, able to acquire electromagnetic radiation in the nanometre range.
On the basis of the phenomenon described above, a device was created for generation of nanometre range electromagnetic radiation, which makes it possible to achieve the above technical result. It includes at least two devices for adjusting electrical power, at least one phase shifting device, at least one electromagnetic wave emitter, at least two exciting and one excited inductors. The excited inductor is connected to the emitter of electromagnetic waves, while both exciting inductors with the same electrical parameters are connected to the AC network through electric power adjustment devices, enabling electric signals with equal amplitudes. The first exciting inductor is connected to the adjusting device through a phase shifting device, which makes it possible to adjust the phase angle between the signals on the first and second exciting inductors and therefore provide creation of the uniformly variable counter-fluxes of mutual induction by the alternating currents of the exciting inductors. The interaction of these uniformly variable magnetic fluxes with the excited inductor makes the movement of conduction electrons in its winding spiral and alternate, providing generation of electromagnetic radiation in the nanometre range.
To sum up, the claimed device allows to create conditions under which the movement of free electrons in a metal acquires a variable spiral character, the kinetic energy of the electrons' movement quantizes and electronic transitions from higher energy levels to lower levels are accompanied by the emission of an electromagnetic wave.
To achieve the above technical result it is necessary to fulfil certain technical conditions. The generator of electrical signals of adjustable frequency and amplitude should be connected to the power supply source; the first exciting inductor should be connected to the electrical signal generator through the phase shifting device and the first power adjustment device, and the second exciting inductor - through the second power adjustment device. Both AC network and AC or DC source could be used. A particular case is the connection to the AC network with a voltage of 220 V and a frequency of 50 Hz. The first exciting inductor should be located coaxially with the second one, and the excited inductor should be located between the first and second exciting inductors and coaxially with them. The first and second exciting inductors should have the same inductance, capacitance and other electrical parameters. The number of winding turns in the first exciting inductor should be equal to the number of winding turns of the second one. However, the number of winding turns in the first exciting inductor may differ from the number of turns in the second one - it may be more or less than the number of winding turns in the second exciting inductance coil. Last, but not least, the phase shift device should provide the phase angle between the signals on the first and second exciting inductors in the range from 0° to 360°. A particular case is the phase angle of 90 degrees.
Several embodiments of the claimed device, regarding the arrangement of parts it contains, are listed below.

Emb. 1. The generator of electrical signals of adjustable frequency and amplitude is connected to a DC source. The first exciting inductor is connected to the electrical signal generator through the phase shifting device and the first electric power adjustment device, and the second exciting inductor is connected to the electrical signal generator through the second electric power adjustment device.

Emb. 2. The first exciting inductor is connected to AC network through the phase shifting device and the first electric power adjustment device, and the second exciting inductor is connected to AC network through the second electric power adjustment device.

Emb. 3. All inductors are made in the form of flat spirals arranged parallel to each other, with the excited inductor located midway between the first and second exciting inductors.

Emb. 4. Exciting inductors are made in the form of flat spirals arranged parallel to each other, and the excited inductor is a continuous electrically conductive body located in the space between the first and second exciting inductors. A continuous electrically conductive body may be solid, liquid or gaseous.

Emb. 5. Exciting inductors, as well as the excited one, are wound around the rod-shaped or toroidal core, and the winding is symmetrical about the horizontal axis of the core.

Emb. 6. The fourth and fifth exciting inductors are added to the claimed device. They are coaxial and arranged perpendicular to the first and second exciting inductors, while their magnetic fluxes are equal in absolute value and one directed oppositely to another. To achieve the above technical result it is necessary that magnetic fluxes of the first and second exciting inductors are directed perpendicularly to the ones of the fourth and fifth exciting inductors, so that electromagnetic fields of the first and fourth inductors have right circular polarization, and the ones of the second and fifth have left circular polarization.

The claimed device allows to obtain electromagnetic radiation with its wavelength and frequency being dependent on the Fermi velocity of metals used as the material of inductors' windings. In different embodiments of the claimed device, metals such as copper, silver, etc. may be used. Fermi velocities of some metals are listed in a table below.

| Metal | $E_F$, eV | $T_F$, K | $v_F$, m/s |
|-------|-----------|----------|------------|
| Li | 4,72 | 55000 | $1,31 \cdot 10^6$ |
| Na | 3,12 | 37000 | $1,07 \cdot 10^6$ |
| K | 2,14 | 24000 | $8,50 \cdot 10^5$ |
| Rb | 1,82 | 21000 | $7,50 \cdot 10^5$ |
| Cs | 1,53 | 18000 | $7,50 \cdot 10^5$ |
| Cu | 7,04 | 82000 | $1,58 \cdot 10^6$ |
| Ag | 5,51 | 64000 | $1,40 \cdot 10^6$ |
| Au | 5,51 | 64000 | $1,40 \cdot 10^6$ |

In the claimed device, the winding of the excited inductor is made of either copper wire (electromagnetic radiation wavelength of $\lambda = 4,6 \cdot 10^{-10}$ m) or silver wire (wavelength of $\lambda = 7,6 \cdot 10^{-10}$ m).

Several variants of the claimed device, regarding the usage of acquired electromagnetic radiation, are listed below.

Var. 1. To provide the possibility of transmitting electromagnetic radiation over long distances, a waveguide is connected to a single terminal of the excited inductor winding. Metallic conductors, electrically conductive materials and semiconductors, as well as dielectrics whose molecules have their own electric dipole moment, can serve as waveguides for ionizing electromagnetic radiation with the frequency of $f = 652 \cdot 10^{15}$ Hz and the wavelength of $\lambda = 4,6 \cdot 10^{-10}$ m.

Var. 2. To enable the processing of various materials (including organic and biological origin) by the electromagnetic radiation, the emitters of electromagnetic waves are connected to the terminals of the excited inductor winding, and the material being processed is located between the emitters.

Var. 3. To enable the processing of gases by electromagnetic radiation, electromagnetic wave emitters are connected to the terminals of the excited inductor winding and are placed in the chamber with the gas being processed.

Var. 4. To create the torque by surface electromagnetic waves, electromagnetic wave emitters are connected to the terminals of the excited inductor winding, and a cylindrical core with side flanges, made of a dielectric material, is located between the emitters on the axis of rotation.

Var. 5. To create the torque by surface electromagnetic waves, electromagnetic wave emitters are located on the surface of fixed package-assembled dielectric disks and are connected in n parallel pairs to the excited inductor winding. Rotating package-assembled dielectric discs are located on the axis of rotation between fixed disks parallel to them at a distance from 0,01 to 10 mm. Number n is selected depending on the required torque.

Var. 6. To enable the preparation of colloidal solutions (including hydrosols) of metals and crystalline substances, electromagnetic wave emitters are connected to the terminals of the excited inductor winding, are located in a dispersion medium (distilled water in particular) and are made of the material necessary to obtain colloidal particles solution.

Var. 7. To obtain the lighting, a cathode and an anode of a cathodoluminescent light source are connected to the terminals of the excited inductor winding. A special case is the use of a cathodoluminescent light source with a cold (auto emission) cathode.

BRIEF DESCRIPTION OF FIGURES

Fig. 1 is the functional diagram of the claimed device, which comprises the generator of electrical signals of adjustable frequency and amplitude (1), the first electric power adjustment device (2), the second electric power adjustment device (3), the phase shifting device (4), the first exciting inductor (5), the second exciting inductor (6), the excited inductor (7), the electromagnetic wave emitter (8).

Fig. 2 is the functional diagram of the claimed device, which comprises the first electric power adjustment device (2), the second electric power adjustment device (3), the phase shifting device (4), the first exciting inductor (5), the second exciting inductor (6), the excited inductor (7), the electromagnetic wave emitter (8).

Fig. 3 is the functional diagram of the claimed device, in which all inductors are made in the form of flat spirals parallel to each other, and the excited inductor (7) is located midway between the first (5) and second (6) exciting inductors.

Fig. 4 is the functional diagram of the claimed device, in which the exciting inductors (5) and (6) are made in the form of flat spirals arranged parallel to each other, and the excited inductor (7) is a continuous electrically conducting body placed between the first and second exciting inductors.

Fig. 5 is the functional diagram of the claimed device, in which the first (5) and second (6) exciting inductors, as well as the excited inductor (7) are wrapped around the rod-shaped core, and the winding is symmetrical about the horizontal axis of the rod-shaped core.

Fig. 6 is the functional diagram of the claimed device, in which the first (5) and second (6) exciting inductors, as well as the excited inductor (7) are wrapped around the toroidal core, and the winding is symmetrical about the horizontal axis of the toroidal core.

Fig. 7 is the functional diagram of the claimed device, in which electromagnetic wave emitters (8) and (9) are connected to the terminals of the excited inductor winding (7), and material (10) processed by electromagnetic radiation is placed in the space between emitters (8) and (9).

Fig. 8 is the functional diagram of the claimed device, in which electromagnetic wave emitters (8) and (9) are connected to the terminals of the excited inductor winding (7) and are placed in the chamber (10) with the gas being processed.

Fig. 9 is the functional diagram of the claimed device, in which a cathode (8) and an anode (9) of a cathodoluminescent light source (10) are connected to the terminals of the excited inductor winding (7).

Fig. 10 is the functional diagram of the claimed device, in which the first exciting inductor (5) is connected to the AC network through a phase shifting device (4) and the first electric power adjustment device (2), and the second exciting inductor (6) is connected to the AC network through a second electric power adjustment device (3). The emitters of electromagnetic waves (8) and (9) are connected to the terminals of the excited inductor winding (7), and the material (10) processed by electromagnetic radiation is placed in the space between the emitters (8) and (9).

Fig. 11 is the circuit diagram of the claimed device, which comprises:

- two exciting inductors and one excited inductor located on a ferrite core;
- two electric power adjustment devices;
- one phase shifting device;
- electromagnetic waves emitters.

Fig. 12 shows the arrangement of the windings of inductors.

Fig. 13 shows the parameters of the core.

Fig. 14 shows a fragment of a device where a latex article is placed between the emitters.

Fig. 15 shows the course of exposure of the material to the resulting electromagnetic radiation.

Fig. 16 shows the course of exposure of the material to the resulting electromagnetic radiation.

Fig. 17 shows the course of exposure of the material to the resulting electromagnetic radiation.

Fig. 18 shows the material with broken hydrocarbon bonds.

SUMMARY OF INVENTION

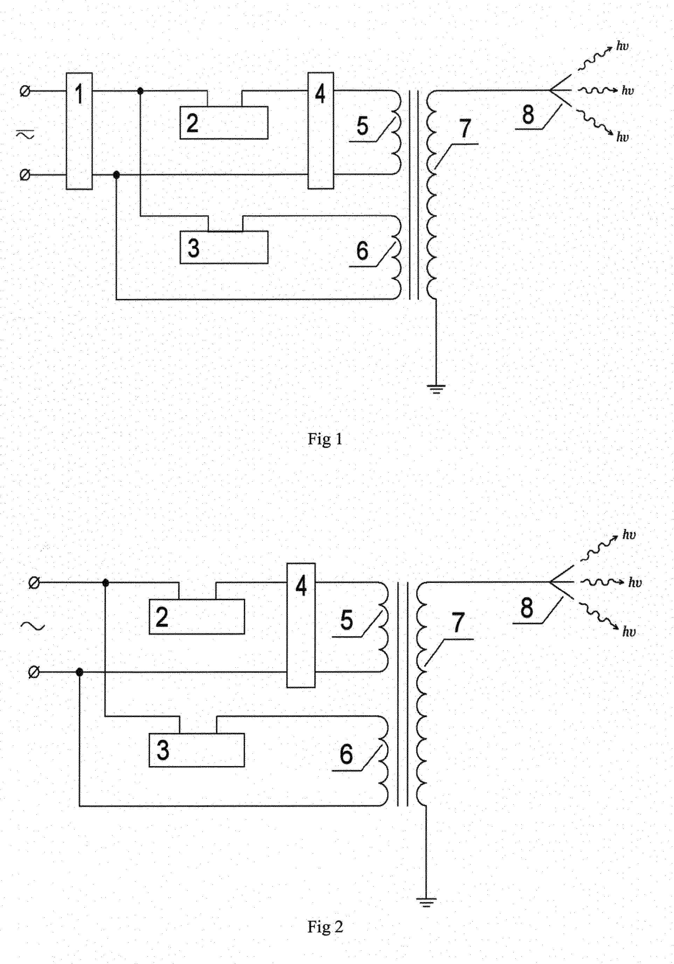

Electromagnetic radiation of nanometre range generating device comprises the generator of electrical signals of adjustable frequency and amplitude (1), at least two electric power adjustment devices (2) and (3), at least one phase shifting device (4), at least two exciting inductors (5) and (6), the excited inductor (7) and at least one electromagnetic wave emitter (8) (Fig. 1).

The generator of electrical signals of adjustable frequency and amplitude (1) is connected to the power supply source; the first exciting inductor (5) is connected to the electrical signal generator (1) through the phase shifting device (4) and the first power adjustment device (2), and the second exciting inductor (6) - through the second power adjustment device (3). The first exciting inductor (5) is made coaxial with the second one (6), and the excited inductor (7) is located inside the space between the first (5) and second (6) exciting inductors and coaxially with them. The number of turns in the windings of first (5) and second (6) exciting inductors can be equal or different. The first (5) and second (6) exciting inductors have the same inductance, capacitance and other electrical parameters. The emitter of electromagnetic waves (8) is connected to the terminals of the excited inductor winding (7) (Fig. 1).

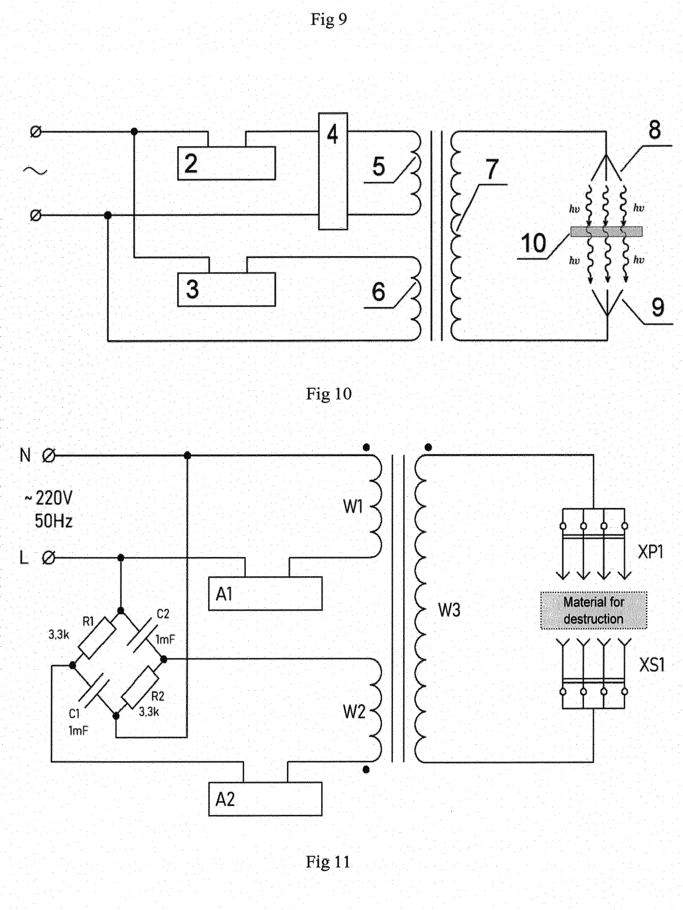

Both AC network (Fig. 2, 10) and AC or DC source (Fig. 1, 3 - 9) could be used. A particular case is the connection to the AC network with a voltage of 220 *V* and a frequency of 50 *Hz*.

Using electric power adjustment devices (2) and (3), the amplitudes of the currents of the exciting inductors (5) and (6) are adjusted and set equal in absolute value.

Using a phase shifting device (4), the phase angle between the signals on the first (5) and second (6) exciting inductors is adjusted in the range from 0° to 360°. A particular case is the phase angle of 90 degrees.

The principle of operation of the claimed device is based on the following. The first exciting inductor (5) is supplied with alternating electric current from the adjustable frequency and amplitude generator (1) through the first electric power adjustment device (2) and the phase shifting device (4). The alternating current of the first exciting inductor (5) creates the first flux of mutual induction and the change of this flux induces the first electromotive force in the excited coil (7). The second exciting inductor (6) is supplied with alternating electric current from the adjustable frequency and amplitude generator (1) through the second electric power adjustment device (3). The alternating current of the second exciting inductor (6) in turn creates a second mutual induction flux, the change of which induces a second, counter-first electromotive force in the excited inductor (7). The electric current that is supplied to the first exciting inductor (5) differs in phase from the electric current that is supplied to the second exciting inductor (6). The amplitudes of the alternating currents in the exciting inductors (5) and (6) are regulated by electric power adjustment devices and are set equal in absolute value. The phase shifting device (4) provides the phase shift of the signal fed to the first exciting inductor (5), relative to the phase of the signal that goes to the second exciting inductor (6), by an angle that is necessary and sufficient to create uniformly variable magnetic fluxes, which provide a simultaneous effect of two equal but opposite Lorentz forces on the conduction electrons. Thus, under the influence of Lorentz forces and opposite uniformly variable electromotive forces, the motion of free electrons in the winding of the excited inductor (7) acquires a variable spiral character, its kinetic energy becomes quantized, and the electronic transitions from higher to lower energy levels are accompanied by the emission of an electromagnetic wave.

The metal wire of the winding of all inductors (5), (6) and (7) can be made of copper, silver and other metals.

The electromagnetic wave propagates into space through the electromagnetic waves emitter (8), which is connected to the terminal of the excited inductor winding (7).

Several options of the claimed device, regarding the arrangement of parts it contains and the usage of acquired electromagnetic radiation, are listed below.

Option 1. The first exciting inductor (5) is connected to AC network with a voltage of 220 *V* and a frequency of 50 *Hz* through a phase shifting device (4) and the first electric power adjustment device (2), and the second exciting inductor (6) is connected to AC network through the second electric power adjustment device (3) (Fig. 2).

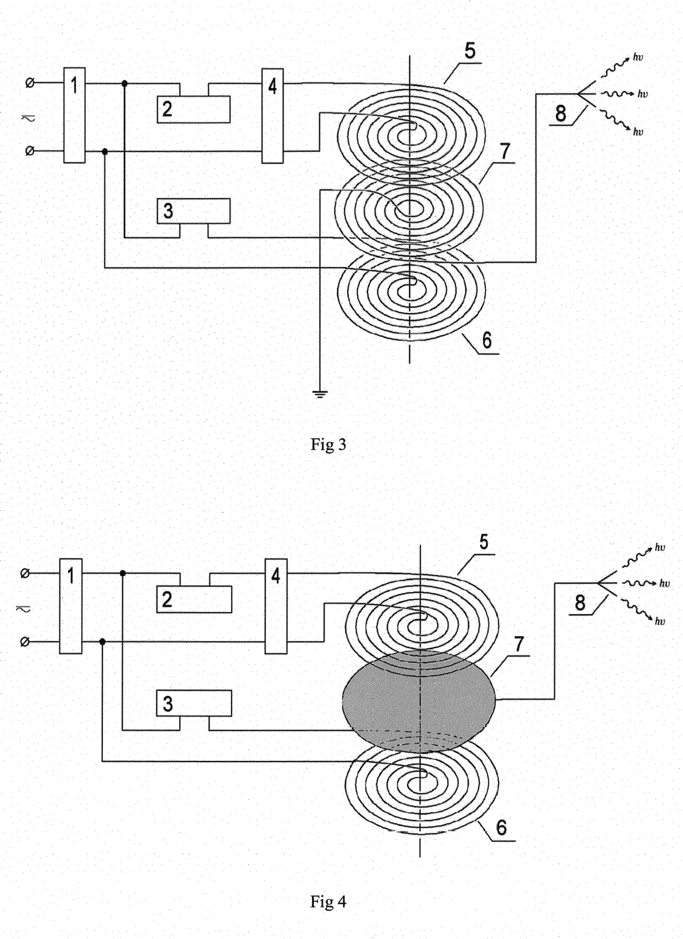

Option 2. All inductors are made in the form of flat spirals arranged parallel to each other, while the excited inductor (7) is located midway between the first (5) and second (6) exciting inductors (Fig. 3).

Option 3. Exciting inductors (5) and (6) are made in the form of flat spirals arranged parallel to each other, and the excited inductor (7) is a continuous electrically conducting body placed between the first and second exciting inductors (Fig. 4). A continuous electrically conductive body may be solid, liquid or gaseous.

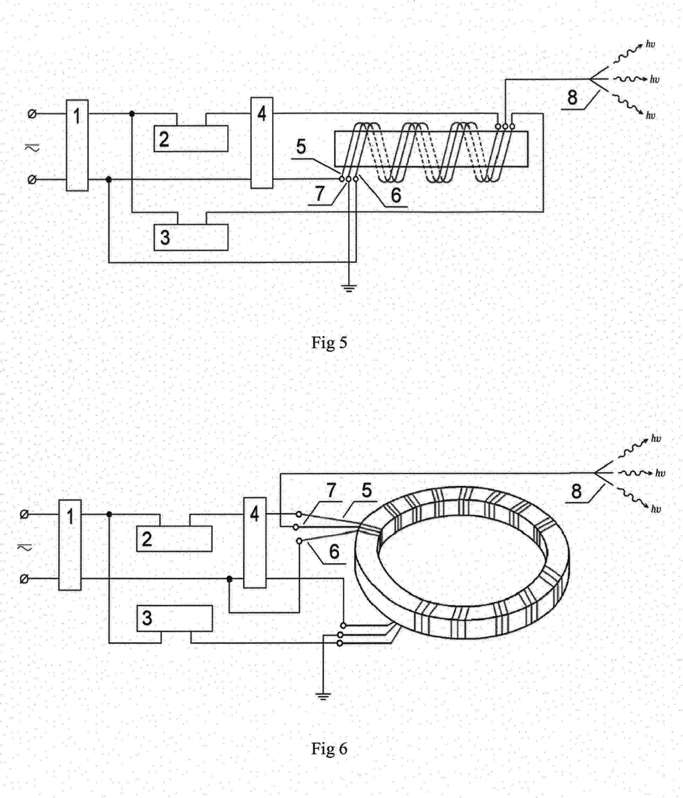

Option 4. Exciting inductors (5) and (6), as well as the excited inductor (7) are wrapped around the rod-shaped (Fig. 5) or toroidal (Fig. 6) core, and the winding is symmetrical about the horizontal axis of the core.

Option 5. The fourth (5') and fifth (6') exciting inductors are added to the claimed device. They are coaxial and arranged perpendicular to the first (5) and second (6) exciting inductors, at that the magnetic flux of the fourth exciting inductor (5') is directed oppositely and is equal in absolute value to the magnetic flux of the fifth exciting inductor (6'). Magnetic fluxes of the first (5) and second (6) exciting inductors are directed perpendicularly to the ones of the fourth (5') and fifth (6') exciting inductors, so that electromagnetic fields of the first (5) and fourth (5') inductors have right circular polarization, and the ones of the second (6) and fifth (6') have left circular polarization.

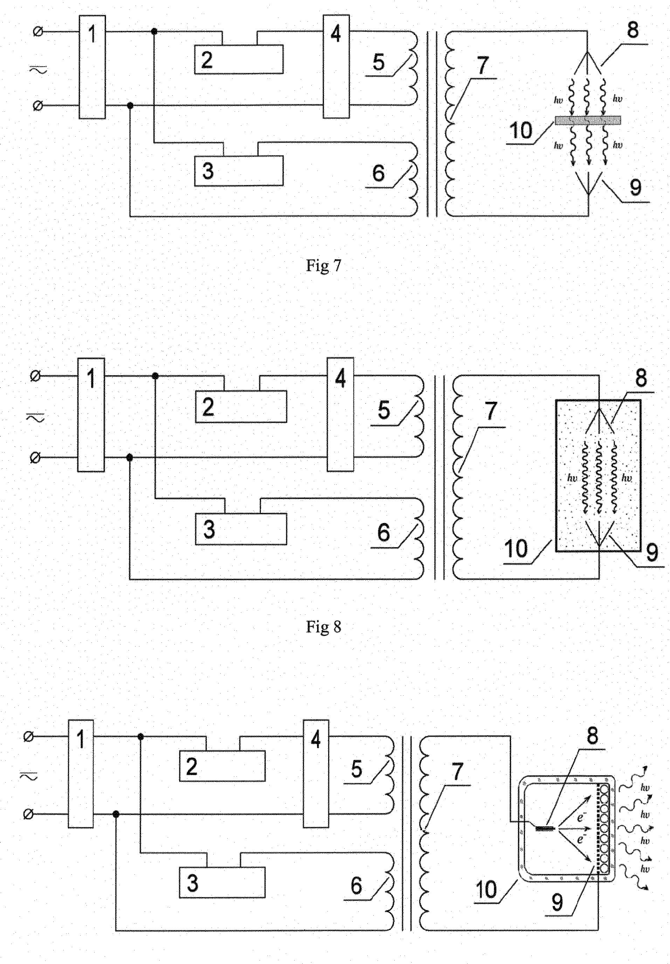

Option 6. Electromagnetic wave emitters (8) and (9) are connected to the terminals of the excited inductor winding (7), and material (10) processed by electromagnetic radiation is placed in the space between emitters (8) and (9) (Fig. 7).

Option 7. Electromagnetic wave emitters (8) and (9) are connected to the terminals of the excited inductor winding (7) and are placed in the chamber (10) with the gas being processed (Fig. 8).

Option 8. Electromagnetic wave emitters (8) and (9) are connected to the terminals of the excited inductor winding (7), and a cylindrical core (10) with side flanges, made of a dielectric material, is located between the emitters on the axis of rotation.

Option 9. Electromagnetic wave emitters (8) and (9) located on the surface of fixed package-assembled dielectric disks are connected to the terminals of the excited inductor winding (7) in n parallel pairs, and rotating package-assembled dielectric disks are located on the axis of rotation between fixed disks parallel to them at a distance from 0,01 to 10 mm.

Option 10. Electromagnetic wave emitters (8) and (9) located in a dispersion medium and made of the material necessary to obtain particles of the dispersed phase of a colloidal solution, are connected to the terminals of the excited inductor winding (7). In the particular case, electromagnetic wave emitters (8) and (9) are made of silver and placed in distilled water.

Option 11. A cathode (8) and an anode (9) of a cathodoluminescent light source (10) are connected to the terminals of the excited inductor winding (7) (Fig. 9). A particular case is the usage of a cathodoluminescent light source with a cold (auto emission) cathode.

EXAMPLE OF THE INVENTION'S USE

The electromagnetic radiation of nanometre range generating device comprises a first electric power adjustment device (2), a phase shifting device (4), a second electric power adjustment device (3), two exciting inductors (5) and (6), one excited inductor (7) and two emitters of electromagnetic waves (8) and (9) (Fig. 10).

The first exciting inductor (5) is connected to AC network with a voltage of 220 *V* and a frequency of 50 *Hz* through the first electric power adjustment device (2) and phase shifting device (4), the second exciting inductor (6) is connected to the same AC network through a second electric power adjustment device (3).

As electric power adjustment devices (2) and (3), two Werkel dimmers WL-09, IP20 series with a maximum dimmable power of 600 *W* are used.

The windings of the first (5) and second (6) exciting inductors are wound around E-shaped core made of ferrite material and have an equal number of turns. The winding of the excited inductor (7) is made on the same E-shaped core made of ferromagnetic material and placed between the first (5) and second (6) exciting inductors. The number of turns of the excited inductor winding significantly exceeds the number of turns of the exciting inductors windings.

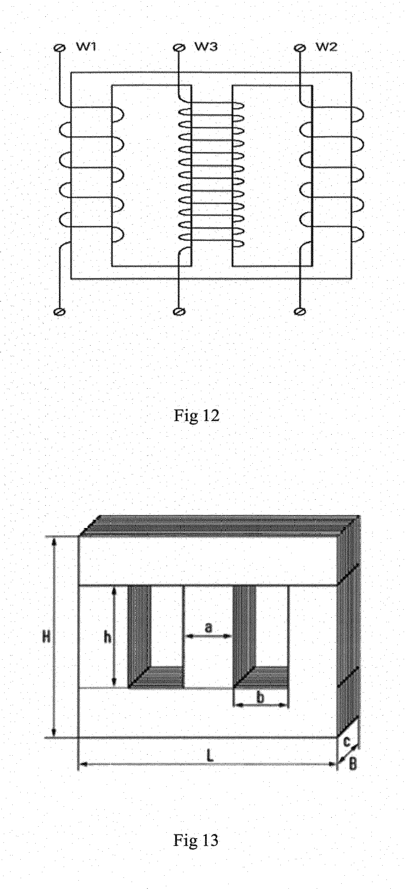

Location and parameters of the windings (Fig. 12):

W1 is the winding of the first exciting inductor (5).
W2 is the winding of the second exciting inductor (6).
W3 is the winding of the excited inductor (7).
Number of turns c W1 - 392.
Number of turns of the winding W2 - 392.
Number of turns of the winding W3 - 1969.
Wire length of the winding W1 - 70 m.
Wire length of the winding W2 - 70 m.
Wire length of the winding W3 - 320 m.
Diameter of the wire winding W1 - 1,06 mm.
Diameter of the wire winding W2 - 1,06 mm.
Diameter of the wire winding W3 - 0,5 mm.
The metal of the winding wire is copper.

Parameters of the core (Fig. 13):

L = 140 mm; B = 60 mm; H = 120 mm;
a = 40 mm; b = 30 mm;
c = 60mm; h = 80 mm.

The phase shifting device (4) is made in the form of a bridge of resistors and capacitors (Fig. 11), the ratio of the ratings of which allows to set the required shift angle $\varphi$ between the phases of the signals fed to the first (5) and second (6) exciting inductors. The angle $\varphi$ was calculated from the following relations:

$$\mathrm{tg}(\varphi/2) = 1/(\Box C_1 R_1) = 1/(\Box C_2 R_2)$$

$$\mathrm{tg}\,\varphi = \frac{2\mathrm{tg}(\varphi/2)}{1 - \mathrm{tg}^2(\varphi/2)}$$

In the claimed device (Fig. 11), equal values of capacitances and ohmic resistances are chosen, i.e. $1/\Box C = R$, and the phase angle $\varphi$ of the signals applied to the exciting inductors is 90°.

Electromagnetic wave emitters (8) and (9) connected to the terminals of the excited inductor winding (7) are made from the pin parts of 14-pin angular connectors, 2,54 mm, type AMP-Latch.

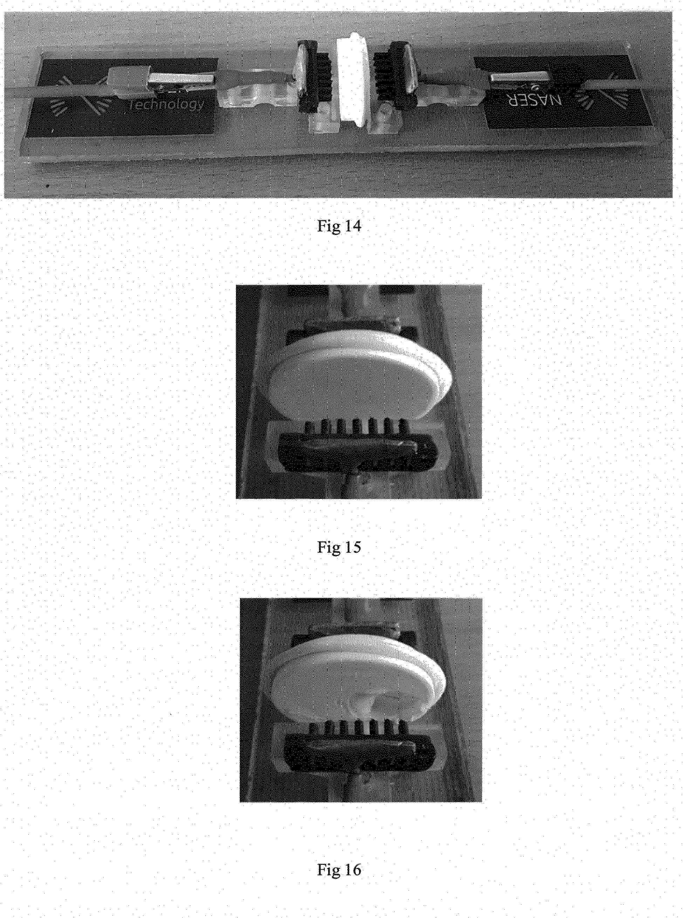

As a material for destruction (10), polymeric high-molecular hydrocarbon compound - a natural rubber latex was chosen. A latex article (medical fingertip) was placed in the space between the emitters (8) and (9) (Fig. 14).

After connecting the claimed device to AC network of 220 *V, 50 Hz,* amplitudes of the currents in the first (5) and second (6) exciting inductors were set to be equal in absolute value by electric power control devices (2) and (3). Equal in amplitude, but shifted in phase, the alternating electric currents of the exciting inductors (5) and (6) began to create uniformly variable counter-fluxes of mutual induction. The change in these fluxes led to the induction in the winding of the excited inductor of opposite electromotive forces. In this case, the opposite magnetic fluxes provided a simultaneous effect on the conduction electrons of two opposite uniformly variable Lorentz forces. Thus, under the influence of Lorentz forces and opposite uniformly variable electromotive forces, the motion of free electrons in the excited inductor winding acquired a variable spiral character, while the kinetic energy of electron motion began to take on discrete values and transitions of electrons between energy levels from higher to lower provided the emission of electromagnetic waves. All inductors' windings had been made of copper, which leaded to the emission of electromagnetic radiation with the frequency of $f = 652 \cdot 10^{15}$ $Hz$ and the wavelength of $\lambda = 4,6 \cdot 10^{-10}$ $m$.

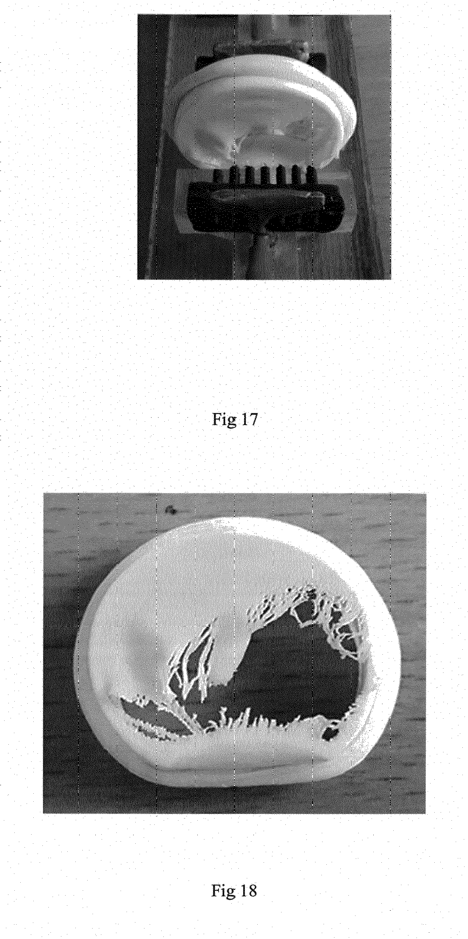

The impact on the material by the acquired electromagnetic radiation lasted for 2 minutes, during which the destruction of the material structure occurred. Fig. 15 depicts the start of the process, Fig. 16, the state of the material after 1 min, Fig. 17, the state of the material after 2 min.

The destruction of the polymeric hydrocarbon material (medical latex fingertip) occurred without a change in temperature (heating) of both the emitters and the material being destroyed. In the process of destruction, no mechanical, thermal, chemical, electrical and other methods of influence on the substance were used. The destruction of hydrocarbon bonds (Fig. 18) under the influence of ionizing electromagnetic radiation occurred within 2 minutes with an electrical power consumption of 4,7 $W$.

Electromagnetic radiation with the above parameters refers to ionizing radiation and can be used in all applications of ionizing radiation, including the technology of substances destruction in solid, liquid and gaseous state.

Experiments conducted with hydrocarbon compounds in various aggregate states (solid, liquid and gaseous) showed high efficiency of the hydrocarbon bonds destruction with minimal electricity consumption in the process of destruction.

The obtained results indicate the possibility of scaling the claimed device and the expediency of its use for the destruction of long hydrocarbon chains of heavy oil. Low energy consumption in the process of hydrocarbon bonds destruction by electromagnetic radiation allows to dramatically increase the efficiency of the GTL technology (Gas To Liquid), used to convert the associated petroleum gas (APG) into a liquid.

## Claims

1. The electromagnetic radiation of nanometre range generating device comprises at least two devices for adjusting electrical power, at least one phase shifting device, at least one electromagnetic wave emitter, at least two exciting and one excited inductors; the excited inductor is connected to the electromagnetic waves emitter, while both exciting inductors with the same electrical parameters are connected to the AC network through electric power adjustment devices, enabling electric signals with equal amplitudes; the first exciting inductor is connected to the adjusting device through a phase shifting device, which makes it possible to adjust the phase angle between the signals on the first and second exciting inductors and therefore provide creation of the uniformly variable counter-fluxes of mutual induction by the alternating currents of the exciting inductors; the interaction of these uniformly variable magnetic fluxes with the excited inductor makes the movement of conduction electrons in its winding spiral and alternate, providing generation of electromagnetic radiation in the nanometre range.

2. The device according to claim 1, in which the generator of electrical signals of adjustable frequency and amplitude is connected to AC source, the first exciting inductor is connected to electrical signal generator through a phase shifting device and a first electrical power adjustment device, the second exciting inductor is connected to the electrical signals generator through the second electric power adjustment device.

3. The device according to claim 2, in which the generator of electrical signals of adjustable frequency and amplitude is connected to DC source.

4. The device according to any one of claims 1 - 3, in which the first exciting inductor is made coaxially with the second exciting inductor and the excited inductor is made inside the space between the first and second exciting inductors.

5. The device according to claim 4, in which the excited inductor is coaxial with the first and second exciting inductors.

6. The device according to any one of claims 1 - 3, in which the number of turns of the first exciting inductor winding is equal to the number of turns of the second exciting inductor windings and both exciting inductors have the same electrical parameters.

7. The device according to any one of claims 1 - 3, in which all inductors are wrapped around a toroidal core, while the windings are symmetrical about the horizontal axis of the core.

8. The device according to any one of claims 1 - 3, in which all inductors are wrapped around a rod-shaped core, while the windings are symmetrical about the horizontal axis of the core.

9. The device according to any one of claims 1 - 3, in which all inductors are wrapped around an armoured core, while the winding of the excited inductor is located midway between the windings of the first and second exciting inductors at an equal distance from them and the windings are made symmetrical about the horizontal axis of the core.

10. The device according to any one of claims 1 - 3, in which all inductors are made in the form of flat spirals and are parallel to each other, while the excited inductor is located midway between the first and second excitation coils.

11. The device according to any one of claims 1 - 3, in which the exciting inductors are made in the form of flat spirals parallel to each other, and the excited inductor is a continuous electrically conductive body located in the space between the first and second exciting inductors.

12. The device according to claim 11, wherein the continuous electrically conducting body is a solid, gas or liquid.

13. The device according to any one of claims 1 - 12, in which the alternating current of the first exciting inductor in absolute value is equal to the alternating current of the second exciting inductor.

14. The device according to any one of claims 1 - 13, in which the phase angle between the signals on the first and second exciting inductors is in the range from 0° to 360°.

15. The device according to claim 14, in which the phase shift angle is 90°.

16. The device according to any one of claims 1 - 15, in which the mutual induction fluxes generated by alternating currents in the exciting inductors are uniformly variable, oppositely directed and equal in absolute value.

17. The device according to any one of claims 1 - 3, comprising the fourth and fifth coaxial exciting inductors, which are arranged perpendicular to the first and second coaxial exciting inductors, and the magnetic fluxes of the fourth and fifth exciting coils, like magnetic fluxes of the first and the second exciting coils are uniformly variable, oppositely directed and equal in absolute value.

18. The device according to claim 17, in which the magnetic fluxes of the first and second exciting inductors are directed perpendicular to the magnetic fluxes of the fourth and fifth exciting inductors, while the electromagnetic fields of the first and fourth exciting inductors have the first polarization, and the electromagnetic fields of the second and fifth exciting inductors have the second polarization, and the first polarization is opposite to the second polarization.

19. The device according to any one of claims 1 - 18, in which the wavelength of the generated electromagnetic radiation depends on the material of the excited inductor winding.

20. The device according to any one of claims 1 - 10, 13 - 18, in which the excited inductor winding is made of copper wire and the electromagnetic radiation has a wavelength of 0,46 nm.

21. The device according to any one of claims 1 - 10, 13 - 18, in which the excited inductor winding is made of silver wire and the electromagnetic radiation has a wavelength of 0,76 nm.

22. The device according to any one of claims 1 - 10, 13 - 21, in which electromagnetic wave emitters are connected to the terminals of the excited inductor winding, and in the space between the emitters there is a material processed by electromagnetic radiation.

23. The device according to claim 22, in which electromagnetic wave emitters are located inside the chamber with the gas being processed.

24. The device according to claim 22, in which in the space between the emitters on the axis of rotation there is a cylindrical core with side flanges, made of a dielectric material.

25. The device according to any one of claims 1 - 10, 13 - 21, in which electromagnetic wave emitters located on the surface of fixed package-assembled dielectric disks are connected to the terminals of the excited inductor winding in n parallel pairs, and rotating package-assembled dielectric disks are located on the axis of rotation between fixed disks parallel to them at a distance from 0,01 to 10 mm.

26. The device according to any one of claims 1 - 10, 13 - 21, in which electromagnetic wave emitters are connected the terminals of the excited inductor winding and are located in the dispersion medium and made of the material necessary to obtain particles of the dispersed phase of the colloidal solution.

27. The device according to claim 26, in which electromagnetic wave emitters are made of silver and are placed in a distilled water.

28. The device according to any one of claims 1 - 10, 13 - 21, in which the cathode and the anode of the cathodoluminescent light source are connected to the terminals of the excited inductor winding.

29. The device according to claim 28, in which the cathode and the anode of the cathodoluminescent light source with the cold (auto emissive) cathode are connected to the terminals of the excited inductor winding.


**Amended claims in accordance with Rule 137(2) EPC.**

1. The electromagnetic radiation of nanometre range generating device comprises at least two devices for adjusting electrical power, at least one phase shifting device, at least one electromagnetic wave emitter, at least two exciting and one excited inductors; the excited inductor is connected to the electromagnetic waves emitter, while both exciting inductors are connected to the AC network through electric power adjustment devices, enabling electric signals with equal amplitudes; the first exciting inductor is connected to the adjusting device through a phase shifting device, which makes it possible to adjust the phase angle between the signals on the first and second exciting inductors and therefore provide creation of the counter-fluxes of mutual induction by the alternating currents of the exciting inductors; the interaction of these magnetic fluxes with the excited inductor makes the movement of conduction electrons in its winding spiral and alternate, providing generation of electromagnetic radiation in the nanometre range.

2. The device according to claim 1, in which the generator of electrical signals of adjustable frequency and amplitude is connected to AC source, the first exciting inductor is connected to electrical signal generator through a phase shifting device and a first electrical power adjustment device, the second exciting inductor is connected to the electrical signals generator through the second electric power adjustment device.

3. The device according to claim 2, in which the generator of electrical signals of adjustable frequency and amplitude is connected to DC source.

4. The device according to any one of claims 1 - 3, in which the first exciting inductor is made coaxially with the second exciting inductor and the excited inductor is made inside the space between the first and second exciting inductors.

5. The device according to claim 4, in which the excited inductor is coaxial with the first and second exciting inductors.

6. The device according to any one of claims 1 - 3, in which the number of turns of the first exciting inductor winding is equal to the number of turns of the second exciting inductor windings and both exciting inductors have the same electrical parameters.

7. The device according to any one of claims 1 - 3, in which all inductors are wrapped around a toroidal core, while the windings are symmetrical about the horizontal axis of the core.

8. The device according to any one of claims 1 - 3, in which all inductors are wrapped around a rod-shaped core, while the windings are symmetrical about the horizontal axis of the core.

9. The device according to any one of claims 1 - 3, in which all inductors are wrapped around an armoured core, while the winding of the excited inductor is located midway between the windings of the first and second exciting inductors at an equal distance from them and the windings are made symmetrical about the horizontal axis of the core.

10. The device according to any one of claims 1 - 3, in which all inductors are made in the form of flat spirals and are parallel to each other, while the excited inductor is located midway between the first and second excitation coils.

11. The device according to any one of claims 1 - 3, in which the exciting inductors are made in the form of flat spirals parallel to each other, and the excited inductor is a continuous electrically conductive body located in the space between the first and second exciting inductors.

12. The device according to claim 11, wherein the continuous electrically conducting body is a solid, gas or liquid.

13. The device according to any one of claims 1 - 12, in which the alternating current of the first exciting inductor in absolute value is equal to the alternating current of the second exciting inductor.

14. The device according to any one of claims 1 - 13, in which the phase angle between the signals on the first and second exciting inductors is in the range from 1-5° to 360°.

15. The device according to claim 14, in which the phase shift angle is 90°.

16. The device according to any one of claims 1 - 15, in which the mutual induction fluxes generated by alternating currents in the exciting inductors are uniformly variable, oppositely directed and equal in absolute value.

Fig 1

Fig 2

Fig 3

Fig 4

Fig 5

Fig 6

Fig 7

Fig 8

Fig 9

Fig 10

Fig 11

W1          W3          W2

Fig 12

H    h    a    b    c    B    L

Fig 13

Fig 14

Fig 15

Fig 16

Fig 17

Fig 18

Europäisches
Patentamt

European
Patent Office

Office européen
des brevets

# EUROPEAN SEARCH REPORT

Application Number

EP 19 00 0040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/191576 A1 (SAMSONOV VITALY FEDOROVICH [RU]; PASTUKHOV ANDREY VIKTOROVICH [RU]) 27 December 2013 (2013-12-27) * see fig. 1, 7 and the description thereof; * * paragraph [0010] * ----- | 1 | INV. H05G2/00 H01F17/04 H01F17/06 H01F27/28 H01F27/42 H01F38/00 |
| A | US 2014/098929 A1 (DELFORGE ADRIAN [US]) 10 April 2014 (2014-04-10) * fig. 1 and the description thereof * ----- | 1 | |

| | TECHNICAL FIELDS SEARCHED (IPC) |
|---|---|
| | H05G H01F |

The present search report has been drawn up for all claims

| Place of search | Date of completion of the search | Examiner |
|---|---|---|
| Munich | 1 July 2019 | Angloher, Godehard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 00 0040

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2019

| Patent document cited in search report | | Publication date | Patent family member(s) | | Publication date |
|---|---|---|---|---|---|
| WO 2013191576 | A1 | 27-12-2013 | RU | 2014151682 A | 10-08-2016 |
| | | | WO | 2013191576 A1 | 27-12-2013 |
| US 2014098929 | A1 | 10-04-2014 | CA | 2673298 A1 | 03-07-2008 |
| | | | CN | 101632141 A | 20-01-2010 |
| | | | EP | 2104940 A2 | 30-09-2009 |
| | | | EP | 2490232 A1 | 22-08-2012 |
| | | | EP | 2492932 A1 | 29-08-2012 |
| | | | EP | 2533258 A2 | 12-12-2012 |
| | | | EP | 2806437 A1 | 26-11-2014 |
| | | | JP | 5480630 B2 | 23-04-2014 |
| | | | JP | 2010515407 A | 06-05-2010 |
| | | | US | 2010066340 A1 | 18-03-2010 |
| | | | US | 2014098929 A1 | 10-04-2014 |
| | | | WO | 2008079870 A2 | 03-07-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4376917 A

- RU 2488243